# EUROPEAN PATENT SPECIFICATION

(11) **EP 0 440 246 B1**
(45) Date of publication and mention of the grant of the patent: **17.05.1995**
(21) Application number: 91101324.1
(22) Date of filing: 01.02.1991
(51) Int. Cl.: B65H 59/16

(54) **Strand braking apparatus**
Bremsvorrichtung für fadenförmiges Gut
Dispositif du frein pour fils ou torons métalliques

(30) Priority: 02.02.1990 DE 4003086; 17.02.1990 DE 4005073; 20.06.1990 DE 4019585
(43) Date of publication of application: 07.08.1991
(73) Proprietor: BARMAG AG, D-42862 Remscheid (DE)
(72) Inventor: Berges, Dietrich, W-5277 Marienheide (DE); Führer, Robert, W-5630 Remscheid 11 (DE); Lentz, Harald, W-5630 Remscheid 11 (DE)
(74) Representative: Pfingsten, Dieter, Dipl.-Ing.

(56) References cited:
- CH-A- 545 743
- DE-A- 2 808 470
- GB-A- 2 117 015
- GB-A- 2 137 237
- US-A- 3 830 050
- US-A- 4 516 739

## Description

The present invention relates to an apparatus for imparting a braking force to an advancing strand. In the present application, the term "strand" is intended to encompass all linear structures, such as wires, yarns, bands, ropes, and the like.

A strand brake is disclosed in U.S. Patent 3,830,050, which relates to a wire stranding machine. The known brake is universally usable for the adjustment of the tension of a strand, and it is used in particular for the adjustment of the tension of wires, bands, yarns, etc., which are withdrawn from a freely rotatable supply spool with a brake. Such known brakes have the disadvantage that the braking effect and, thus, also the increase of the tension are dependent on the amount of the strand tension. Another disadvantage is that despite the control, the tension increases as the spool empties from the full to the empty condition, when the brake is operative on the spool. This increase of tension is larger, the greater the tension is.

Yet another disadvantage is that the brake is adjusted to a certain strand tension right from the beginning. This tension is adjusted for the stationary operation to a rated speed; it can nonetheless be too high for the threading of the strand and for the startup of the machine, and can lead to difficulties, in particular to strand breaks. This applies especially to the use of the strand brake in machines in which the strand which is restrained by the brake, subsequently forms a free flying balloon.

It is an object of the present invention to provide a strand brake which operates such that, especially when the strand is withdrawn from a supply spool, the tension of the strand has a controlled, desired gradient, that is low in particular at a standstill and at a startup, and remains substantially constant in the stationary operation, and that possible changes are likewise independent of the amount of the strand tension.

The above and other objects and advantages of the present invention are achieved through an apparatus according to claim 1.

In the present invention, the first and second braking means are arranged in series along the path of the advancing strand. The first braking means comprises a device for monitoring the strand tension together with a brake which is controlled as a function of the strand tension. A frequently used braking means of this type is a so-called compensating arm brake. Such a brake allows the supply spool of the advancing strand to be braked by a spring force, and the spring force can be relieved as a function of the increasing strand tension which is measured by the compensating arm. More particularly, in the case of a compensating arm brake, the strand tension is controlled by a compensating arm, which is pivoted in one direction by gravity or the force of a spring and guides the yarn in a loop, the size of the loop being dependent on the tension of the strand. The position of the compensating arm in turn controls the braking force applied to the supply spool.

From GB 21 17 015 A an apparatus for imparting a braking force as defined in the preamble of claim 1 is known. It represents a winding device comprising two braking means for a running yarn being positioned one behind the other in the yarn path. The upstream brake by friction directly acts upon the yarn pulled over the end of a supply package and the downstream brake mechanically acts upon the axle of a tension pulley about which the yarn is wound. The brakes are controlled dependent on the tension in the yarn running to the winding spindle.
The known combination of braking means is not suited for solving the described problems in a wire stranding machine in which the wire must be withdrawn tangentially from a rotatably mounted supply spool for avoiding an unwanted pretwisting of the components to be stranded. Furthermore it is disadvantageous to directly contact the wire for braking its speed on cause of possible damages and not to brake the supply package and its rotational speed.

A magnetically acted brake for braking a wire in a coil winding machine is known from GB 21 37 237 A. The gap between a stationary mounted permanent magnet and a magnetizable disc is controlled herein dependent on the movement of a tension bar which is acted upon as a function of the tension in the advancing wire.

As to movement dependent brakes, electromagnetic brakes are especially suitable, such as, for example, an eddy-current brake. In an eddy-current brake, a magnet performs a movement relative to a soft-iron disc with a layer of an electric conductor. As a result eddy currents are induced in the layer of the electric conductor, thereby producing a movement dependent braking moment.
Consequently, the eddy-current brake has the advantage that the "threading" of the strand, i.e., the pulling of the strand into the machine is to be carried out under very little tension of the strand, which is only applied by the compensating arm brake.

Eddy-current brakes for takeup devices are known, note Trade Journal "Draht" 1962, pp. 53-59. However, the present invention is concerned with effecting a combination of a mechanical and a movement dependent brake. Consequently, the produced strand tension is composed of two portions. The mechanically produced portion is preferably kept small in relation to the movement dependent portion, and as a result, mechanical troubles, such as, for example, the decreasing diameter during the unwinding process, have only a slight effect on the overall strand tension. Essential is that at a speed which remains constant, the larger, movement dependent portion should also remain constant. The overall change of the strand tension resulting from an interference is therefore small.

In one preferred embodiment, the second or movement dependent braking means comprises a roll about which the advancing strand is wound, and an eddy-current brake which comprises a stationary magnet and an electromagnetic disc which is connected to the roll and positioned adjacent the magnet. In this embodiment, it is also possible and advantageous at low strand speeds and/or high strand tensions, to connect the roll driven by the strand with the eddy-current disc via a drive mechanism, for example a belt drive with a step-down gear, so as to obtain a high rotational speed of the eddy-current disc and thus high braking forces. If only slight strand tensions are produced, an operative connection in the opposite sense, i.e. a step-up gear, may be provided.

The eddy-current brake and the other, movement dependent brakes have the further advantage that the balloon tension in cabling, winding and twisting machines can be kept very low at low speeds, and increases only with the speed. This permits a balloon to be formed at low speeds, so that the friction of the strand on the deflecting guide members and thus also the wear on the deflecting guide members remain very small. As a result, it is possible to adapt the braking effect to the speed and to the speed-dependent balloon tension of the strand.

In a further embodiment, the second or movement dependent brake may employ a hysteresis brake, which has the advantage that it is possible to adjust a very small braking moment which is exerted by the mechanical compensating arm brake, so that only a very slight change of this braking moment occurs. The essential portion of the braking moment, however, is to be produced by the hysteresis brake and is, therefore, constant so that the change of the braking moment, which occurs on the compensating arm brake as the diameter of the spool changes, is slight in relation to the overall braking moment.

In the hysteresis brake, a magnet performs a movement relative to a magnetizable hysteresis material, whereby a continuous remagnetization of the hysteresis material occurs. In this brake, a constant braking moment results which is independent of the relative movement.

However, a disadvantage of the above described, movement dependent brakes, in particular the eddy-current brake, is that the braking force is not upwardly limited. Consequently, the braking force is also dependent on the operating speed. It is possible, though, to make a compensation by the adjustment of the gap between the primary and the secondary portion of the eddy-current brake. However, another object of the present invention is to limit the braking force during a standstill and additionally also at the startup, but to keep it otherwise constant irrespective of the operating speed. Primarily, it is intended to facilitate threading and to adapt the strand tension to the growth of the balloon which occurs with the startup of the machine.

The present invention may further include a speed controlled clutch, by which the second braking means is engaged. In this embodiment, the second braking means is composed of two brakes, which are successively arranged. On the one hand, there is the brake clutch, which is speed-dependent. This function can be advantageously performed, for example, by a centrifugal clutch. On the other hand, there is a further brake attached to the non-drive end of the brake clutch. This further brake may be dependent on movement (for example, a hysteresis brake), on speed (for example, an eddy-current brake), or be independent (for example a mechanical or frictional brake). A braking of the non-drive end of the speed-dependent brake clutch by a hysteresis brake has the advantage that the hysteresis brake is free of wear, and otherwise dependent on movement, but substantially independent of speed. The adjustment of the speed-dependent brake clutch allows in this embodiment to set any desired, optimal transition between a lower level of the strand tension, which exists at a standstill, and an upper level of the strand tension, which exists during a continuous operation.

To avoid a mutual influence of the two braking means, it is preferred that the second braking means be arranged, when viewed in the path of the strand, downstream of the measuring point for the strand tension of the first braking means.

Some of the objects and advantages of the present invention having been stated, others will appear as the description proceeds, when taken in conjunction with the accompanying drawings, in which
Figure 1 is a schematic view of an apparatus for imparting a braking force to an advancing strand in accordance with the present invention, and which comprises a compensating arm brake and a movement dependent brake;
Figures 2-3 are diagrams showing the variation of the strand tension over the diameter of the supply spool;
Figure 4 is a schematic view of a second embodiment of the invention, and which comprises a compensating arm brake and speed dependent combination of a brake clutch and a hysteresis brake;
Figure 5 is a diagram showing the variation of the strand tension during the startup; and
Figure 6 is a diagram illustrating the relationship between rotational speed and braking force for an eddy-current brake and a hysteresis brake.

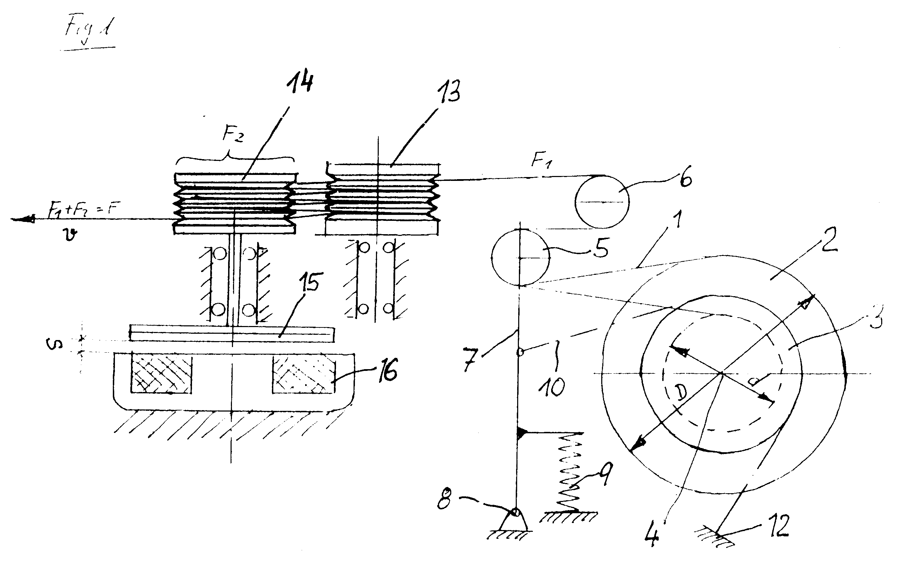

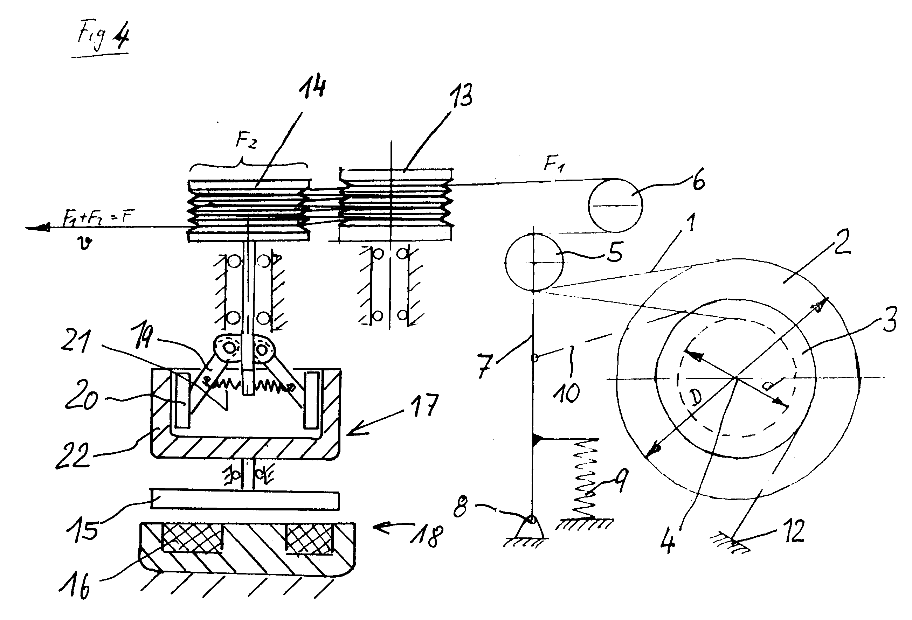

In the embodiments of Figures 1 and 4, the strand 1 is withdrawn from a supply spool 2, for example, by a twisting, cabling, processing or rewinding mechanism at a constant speed v. The supply spool 2 is mounted on a shaft 4, which is supported for free rotation, and which is provided with a brake. To this end, the supply spool 2 is firmly connected with a brake disk 3. The brake disk 3 is partially looped by a brake band 10, which is stationarily attached at point 12 and connected at its other end to a compensating arm 7. The compensating arm 7 is a lever which is pivotally connected at a single pivot 8. At its free end, the compensating arm 7 mounts a roll 5, which is partially looped by the strand as it is withdrawn from the supply spool 2. The compensating arm 7 is pivoted by a compression spring 9 to the left (counterclockwise) as seen in Figure 1, so that the brake band 10 is tensioned.

Arranged in the path of the strand downstream of the compensating arm roll 5 is a deflecting roll 6. The deflecting roll 6 is followed by another pair of stationary rolls, comprising a deflecting roll 13 and a measuring roll 14. The strand loops about both of the rolls 13, 14 several times. The deflecting roll 13 and measuring roll 14 are supported for free rotation. In the embodiment of Figure 1, the mounting shaft of the measuring roll 14 is fixedly connected to a metal disc 15, which is designed as an electromagnetic disc. It is also possible to connect the electromagnetic disc 15 with the measuring roll 14 via a drive mechanism with a step-up or a step-down gear. Opposite to the electromagnetic disk 15 is the face of a magnet 16. Left between the two is a small gap with a width S, which is preferably adjustable so that the magnet 16 is displaceable in the direction toward the electromagnetic disc 15.

During startup, the full supply spool has an initial diameter D, and the diameter decreases to a diameter d as the strand is withdrawn. The strand advancing from the supply spool loops about the compensating arm roll 5 and the deflecting roll 6 respectively at about 180°, so that it is guided in this region in the shape of an S or a Z. The compensating arm roll 5 moves substantially parallel between the strand segment advancing to it and the strand segment leaving it. Downstream of the deflecting roll 6, the strand loops several times about both the deflecting roll 13 and the measuring roll 14.

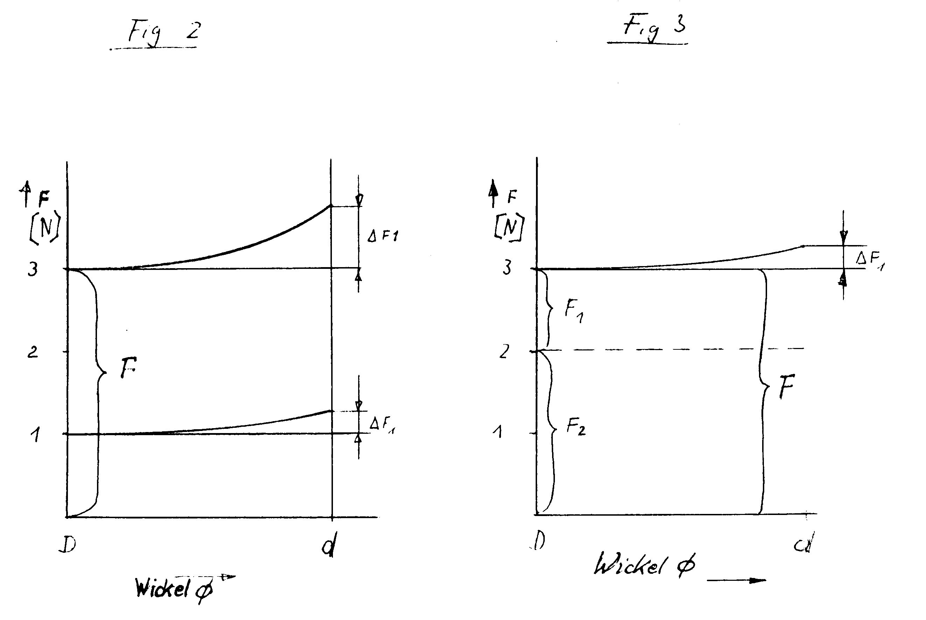

In operation, the strand 1 drives the electromagnetic disc 15 at the rated speed of the machine at a constant speed. As a result, eddy currents are generated in the disc, and a braking moment is produced, which causes a tension or force F2 on the strand. This tension F2 is plotted in the diagram of Figure 3. The force of spring 9 further causes a tension or force F1 on the strand respectively in the strand segment advancing to the compensating arm roll 5 and in the strand segment leaving such roll. When the strand tension decreases, the force of spring 9 pivots the compensating arm so as to increase the strand loop, which is formed between the supply spool 2 and the stationary deflecting roll 6. As a result, the brake band 10 is simultaneously tensioned to result in an increased braking of the supply spool 2, with the consequence that a tendency to an increase of the strand tension develops. The process is reversed when the strand tension increases. It is obvious that the torque exerted by the tension F1 on the supply spool is dependent on the diameter of the latter. Consequently, the tension necessary to overcome a predetermined braking moment is smaller at a large diameter D of the supply spool than at a small diameter d. This means that in the course of the unwinding cycle a change delta F1 of the tension occurs on cause of the variation of the tension of spring 9; this change delta F1 is plotted in the diagram shown in Figure 3. As can further be seen in Figure 3, the overall tension $\text{F = F1 + F2}$ at the outlet of the brake is composed of a portion F1, which is caused by the first, tension-dependent brake, and by the portion F2 which is caused by the movement dependent brake. As can still further be noted from Figure 3, this second portion F2 is selected greater at a predetermined, constant strand speed than the first, tension-dependent portion F1. Consequently, the change delta F1 of this portion is likewise slight in relation to the overall strand tension.

Illustrated in the diagram of Figure 2 is the variation of the strand tension over the diameter of the supply spool for a compensating arm brake only. When supply spools with a low tension are processed, the amount of the diameter dependent increase delta F1 of the tension can be kept low. However, it is percentagewise large in comparison with the overall strand tension, namely just as large as in the case of a higher selected tension. In the case of a higher selected tension F1, however, a large absolute deviation delta F1 will result as the strand tension varies over the diameter of the spool.

In contrast thereto, the combined braking apparatus of the present invention has the advantage that the variation of the strand tension in the course of a winding cycle is small both as to the amount and as to the percentage.

When designed as a hysteresis brake, the electromagnetic disc 15 is replaced with a disc 15 of a material having a high magnetic retentivity, i.e. a hysteresis material, and which is magnetized by the stationary magnet 16, and which consequently opposes, due to the necessary remagnetization, the relative movement due to a braking movement which is substantially constant.

In the embodiment of Figure 4, the measuring roll 14 is connected, via a speed-dependent brake clutch 17, with a further brake 18, which brakes the non-drive end of the brake clutch 17. Accordingly, the second braking means comprises the brake clutch 17 and the brake 18. The brake clutch is constructed as a centrifugal clutch. To this end, the shaft of the measuring roll 14 is provided with pivot levers 19, which are connected to the shaft and accommodate clutch shoes 20 at their free ends. The pivot levers 19 are pulled radially inwardly by springs 21. The non-drive end of the brake clutch 17 is a rotatably supported cup 22 which surrounds the clutch shoes 20. In the present embodiment, the brake 18 is constructed as a hysteresis brake with a disc 15 of a hysteresis material and a stationary magnet 16.

In operation, the strand, which is withdrawn by means not shown, such as twisting device, as shown in DE-OS 35 31 680, is guided over the measuring roll 14 and drives the same. At a standstill and at very low speeds, the centrifugal clutch 17 does not engage. Consequently, the second braking device on the rolls 13 and 14 does not exert a braking force on the strand. The braking force is exerted only by the first braking device, and thus the strand tension can be very low.

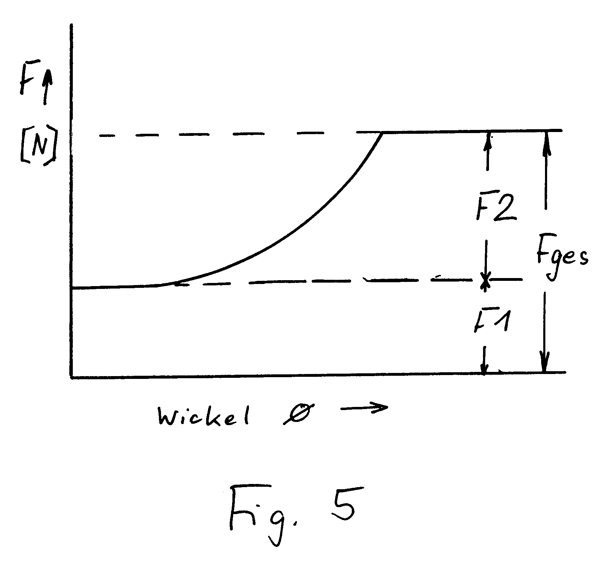

As the speed increases, the brake clutch 17 engages. The braking moment exerted by the magnet 16 on the disc 15, however, is still greater than the moment transmitted by the clutch shoes 20 and the clutch cup 22. Consequently, a braking moment is transmitted on the measuring roll 14, which corresponds only to the moment transmitted by the brake clutch. This moment is speed-dependent and increases with the speed. Upon reaching a certain speed, which can be set by adjusting the centrifugal springs 21, the coupling moment on the non-drive end of the brake clutch 17 overcomes the braking moment exerted by the brake 18, with the consequence that now the moment on the measuring roll 14 corresponds to the moment exerted by brake 18. The variation of the strand tension, which is exerted in this manner at the startup of the machine, is represented in the diagram of Figure 5. The design of the brake clutch 17 results in a substantial consistency of the variation of the tension and the strand tension, which is exerted by the ballooning strand as a function of speed.

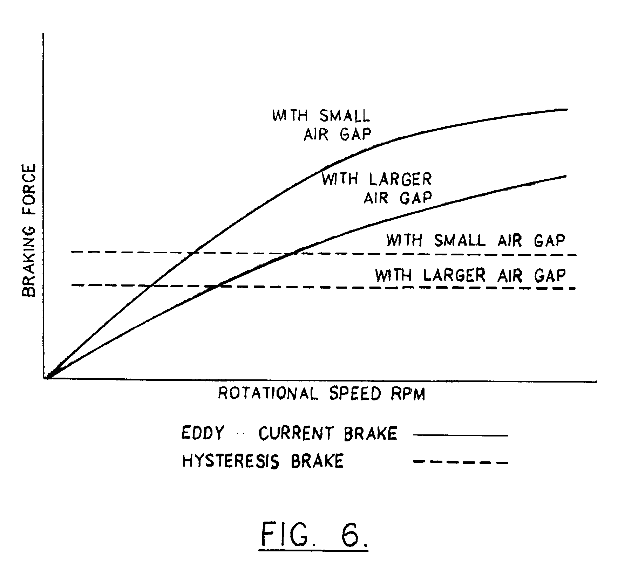

Figure 6 of the drawings illustrates the known relationship between rotational speed and braking force for both an eddy-current brake and a hysteresis brake. As illustrated, the braking force of the eddy-current brake increases with the rotational speed, and with the force being smaller in the case of a large air gap between the cooperating surfaces. With respect to the hysteresis brake, the braking force depends only on the fact that there is relative movement between the cooperating surfaces and it is generally independent of rotational speed. Here again, the force is inversely related to the dimension of the air gap. This distinction is of importance since in a speed dependent brake the braking force is transformed into heat and the heat increases with speed, whereas in a brake which is independent of speed, the generation of heat is constant and can be kept at a low level.

In the drawings and specification, there has been set forth a preferred embodiment of the invention, and although specific terms are employed, they are used in a generic and descriptive sense only and not for purposes of limitation.

## Claims

1. An apparatus for imparting a braking force to an advancing strand (1) which is withdrawn from a supply spool (2)
comprising first braking means (3, 10) and second braking means (14 - 16, 18) for imparting a braking force to the advancing strand (1) wherein the first braking means (3, 10) is controlled as a function of the tension of the advancing strand (1)
characterized by the fact that
the second braking means (14 - 16, 18) which is positioned downstream of said first braking means (3, 10) when viewed in the direction of advance of the strand (1) is acted upon as a function of the movement of the advancing strand and that it comprises a roll (14) about which the advancing strand (1) is adapted to be wound and electromagnetically actuated braking means (15 - 16, 18) connected to said roll (14) for imparting the braking force.

2. An apparatus as defined in claim 1,
characterized by the fact that
the braking means (14 - 16, 18) consists of a disc (15) which is fixedly connected to said roll (14) and a stationary member (16) mounted adjacent said disc (15), with one of said disc and said stationary member comprising a magnet (16).

3. The apparatus as defined in claim 2,
characterized by the fact that
the second braking means (14 - 16, 18) comprises hysteresis brake means being substantially independent of the rotational speed of the roll (14) and wherein the other of said disc (15) and said stationary member (16) includes a hysteresis material.

4. The apparatus as defined in claim 2,
characterized by the fact that
the second braking means (14 - 16, 18) comprises eddy-current brake means (15 - 16) for imparting a braking force dependent from the rotational speed of the roll (14), wherein the other of said disc (15) and said stationary member (16) includes an electromagnetic material.

5. The apparatus as defined in claim 1 or 2,
characterized by the fact that
said apparatus further comprises a rotatably mounted supply spool (2) for the advancing strand (1), and said first braking means (3, 10) comprises means for restraining rotation of said supply spool (2) in response to the tension of the strand (1) being withdrawn therefrom.

6. The apparatus as defined in claim 5,
characterized by the fact that
said means (3, 10) for restraining rotation of said supply spool (2) comprises a compensating arm (7) pivotally mounted adjacent said supply spool (2) and having a free end about which the advacing strand (1) is adapted to advance and such that said arm (7) tends to pivot in a predetermined direction when the tension of the advancing strand (1) increases, biasing means (9) for pivoting said arm (7) in a direction opposite said predetermined direction, and band means (10) operatively interconnecting said arm (7) to said supply spool (2) such that free rotation of said supply spool is increasingly restrained when said arm pivots in the direction opposite said predetermined direction.

7. The apparatus as defined in claim 2,
characterized by the fact that
a speed controlled clutch (17) having a drive end is fixedly connected to said roll (14) and that an opposite non-drive end of the clutch (17) is connected to said disc (15) cooperating with said stationary member.

8. The apparatus as defined in claim 7,
characterized by the fact that
said disc (15) includes a hysteresis material and that the means for imparting a braking force is substantially independent of the rotational speed of said roll (14).

9. The apparatus as defined in claim 7,
characterized by the fact that
said disc (15) includes an electromagnetic material and that the means for imparting a braking force is an eddy-current brake means for which the braking force is a function of the rotational speed of the disc (15).

10. The apparatus as defined in claim 7 or 8 or 9,
characterized by the fact that
said speed controlled clutch (17) comprises a centrifugal clutch (19 - 22).

11. The apparatus as defined in claim 7,
characterized by the fact that
said speed controlled clutch (17) includes means (19 - 22) for controlling the operation of said clutch (17) such that within a predetermined range of relatively low strand speeds the braking force exerted by said movement controlled braking means (15 - 16) is greater than the torque transmitted by said speed controlled clutch (17), and such that the operative braking force comprises only that exerted by said clutch (17), and whereby above said predetermined range of strand speeds the operative braking force comprises that exerted by said movement controlled braking means (15 - 16).

## Patentansprüche

1. Vorrichtung zur Ausübung einer Bremskraft auf einen von einer Lieferspule (2) abgezogenen laufenden Draht (1), die eine erste Bremseinrichtung (3, 10) und eine zweite Bremseinrichtung (14 - 16, 18) zum Aufbringen einer Bremskraft auf den laufenden Draht (1) enthält, wobei die erste Bremseinrichtung (3, 10) abhängig von der Spannung im laufenden Draht (1) gesteuert wird,
dadurch gekennzeichnet, daß
die die stromabwärts von der ersten Bremseinrichtung (3, 10) angeordnete zweite Bremseinrichtung (14 - 16, 18) abhängig von der Bewegung des laufenden Drahtes (1) gesteuert wird und
daß sie eine von dem laufenden Draht (1) zu umschlingende Rolle (14) sowie elektromagnetisch betätigte Bremsmittel zum Aufbringen der Bremskraft aufweist.

2. Eine Vorrichtung gemäß Anspruch 1,
dadurch Gekennzeichnet, daß
die zweite Bremseinrichtung (14 - 16, 18) aus einer mit der Rolle (14) fest verbunden Scheibe (15) und einem stationären, an die Scheibe (15) angrenzenden Teil (16) besteht, wobei die Scheibe oder der stationäre Teil einen Magnet (16) einschließt.

3. Vorrichtung gemäß Anspruch 2,
dadurch gekennzeichnet, daß
die zweite Bremseinrichtung (14 - 16, 18) Hysteresebremsmittel umfaßt, die im wesentlichen von der Drehzahl der Rolle (14) unabhängig sind und bei der die andere Scheibe (15) und das besagte stationäre Teil (16) einen Remanenzwerkstoff enthalten.

4. Vorrichtung gemäß Anspruch 2,
dadurch gekennzeichnet, daß
die zweite Bremseinrichtung (14 - 16, 18) Wirbelstrombremsmittel (15, 16) zum Aufbringen einer von der Drehzahl der Rolle (14) abhängigen Bremskraft umfaßt, worin die andere erwähnte Scheibe (15) und das erwähnte stationäre Teil (16) ein elektromagnetisches Material einschließen.

5. Vorrichtung gemäß Anspruch 1 oder 2,
dadurch gekennzeichnet, daß
die Vorrichtung weiter eine drehbar montierte Lieferspule (2) für den laufenden Draht (1) aufweist und die erste Bremseinrichtung (3, 10) eine Vorkehrung aufweist, welche die Rotation der erwähnten Lieferspule (2) in Abhängigkeit von der Spannung in dem von ihr abgezogenen Draht (1) erschweren.

6. Vorrichtung gemäß Anspruch 5,
dadurch gekennzeichnet, daß
die Vorkehrung zum Erschweren der Rotation der Lieferspule (2) einen angrenzend an die Lieferspule (2) schwenkbar montierten Tänzerarm (7) einschließt,
um dessen freies Ende der laufende Draht (1) derart geführt wird, daß der Arm (7) in eine vorgegebene Richtung schwenken kann, wenn die Spannung im laufenden Draht (1) anwächst,
Schwenkmittel (9) zum Schwenken des erwähnten Arms (7) entgegen der vorerwähnten vorgegebenen Richtung und bandförmige Mittel (10) umfaßt, die den Arm (7) wirksam derart mit der Lieferspule (2) verbinden, daß die freie Rotation ansteigend erschwert wird, wenn der Arm in die Richtung entgegen der erwähnten vorgegebenen Richtung schwenkt.

7. Vorrichtung gemäß Anspruch 2,
dadurch gekennzeichnet, daß
das Antriebsende einer drehzahlabhängig gesteuerte Kupplung (17) drehfest mit der erwähnten Rolle (14) und das entgegengesetzte Abtriebsende der Kupplung (17) mit der erwähnten, mit dem stationären Teil zusammenwirkenden Scheibe (15) verbunden ist.

8. Vorrichtung gemäß Anspruch 7,
dadurch gekennzeichnet, daß
die erwähnte Scheibe (15) einen Remanenzwerkstoff (ein Hysteresematerial) enthält und daß die Vorkehrung zum Erzeugen einer Bremskraft von der Drehzahl der Rolle (14) im wesentlichen unabhängig ist.

9. Vorrichtung gemäß Anspruch 7,
dadurch gekennzeichnet, daß
die erwähnte Scheibe (15) ein elektromagnetisches Material enthält und daß die Vorkehrung zum Erzeugen einer Bremskraft eine Wirbelstrombremsseinrichtung ist, bei welcher die Bremskraft eine Funktion der Drehzahl der Rolle (15) ist.

10. Vorrichtung gemäß Anspruch 7, 8 oder 9,
dadurch gekennzeichnet, daß
die geschwindigkeitsabhängige Kupplung (17) eine Fliehkraftkupplung (19 - 22) aufweist.

11. Vorrichtung gemäß Anspruch 7,
dadurch gekennzeichnet, daß
die erwähnte geschwindigkeitsabhängige Kupplung (17) Mittel (19 - 22) zur Steuerung der Funktion der Kupplung (17) enthält derart, daß innerhalb eines vorgegebenen Bereichs relativ niedriger Drahtgeschwindigkeiten die durch die bewegungsabhängige Bremseinrichtung (15, 16) ausgeübte Bremskraft größer ist als das durch die geschwindigkeitsgesteuerte Kupplung (17) übertragene Drehmoment, und derart, daß die wirksame Bremskraft nur die Kraft umfaßt, die durch die Kupplung (17) ausgeübt wird und daß oberhalb des erwähnten vorgegebenen Bereichs der Drahtgeschwindigkeit die wirksame Bremskraft die Kraft umfaßt, die durch die bewegungsabhängige Bremseinrichtung (15, 16) ausgeübt wird.

## Revendications

1. Appareil pour appliquer une force de freinage à un toron avançant (1) qui est extrait d'une bobine d'alimentation (2), comprenant des premiers moyens de freinage (3, 10), et des seconds moyens de freinage (14-16, 18) pour appliquer une force de freinage au toron avançant (1), les premiers moyens de freinage (3, 10) étant commandés en fonction de la tension du toron avançant (1),
caractérisé par le fait que :
les seconds moyens de freinage (14-16, 18), qui se trouvent en aval desdits premiers moyens de freinage (3, 10) dans la direction d'avance du toron (1), sont actionnés en fonction du déplacement du toron avançant et par le fait qu'ils comprennent un rouleau (14) autour duquel le toron avançant (1) s'enroule ainsi que des moyens de freinage actionnés électromagnétiquement (15-16, 18) reliés audit rouleau (14) pour appliquer la force de freinage.

2. Appareil selon la revendication 1, caractérisé par le fait que les moyens de freinage (14-16, 18) consistent en un disque (15) qui est relié fixement audit rouleau (14) et en un élément fixe (16) monté de façon adjacente audit disque (15), l'un desdits disque et élément fixe comprenant un aimant (16).

3. Appareil selon la revendication 2, caractérisé par le fait que les seconds moyens de freinage (14-16, 18) comprennent un frein à hystérésis sensiblement indépendant de la vitesse de rotation du rouleau (14), l'autre desdits disque (15) et élément fixe (16) comprenant un matériau doué d'hystérésis.

4. Appareil selon la revendication 2, caractérisé par le fait que les seconds moyens de freinage (14-16, 18) comprennent un frein (15-16) à courants de Foucault pour appliquer une force de freinage en fonction de la vitesse de rotation du rouleau (14), l'autre desdits disque (15) et élément fixe (16) comprenant un matériau électromagnétique.

5. Appareil selon la revendication 1 ou 2, caractérisé par le fait que ledit appareil comprend, en outre, une bobine d'alimentation (2) montée de façon tournante pour le toron avançant (1), et lesdits premiers moyens de freinage (3, 10) comprennent des moyens pour réduire la rotation de ladite bobine d'alimentation (2) en réponse à la tension du toron (1) qui est extrait de cette bobine.

6. Appareil selon la revendication 5, caractérisé par le fait que lesdits moyens (3, 10) pour réduire la rotation de ladite bobine d'alimentation (2) comprennent : un bras de compensation (7) monté de façon pivotante au voisinage de ladite bobine d'alimentation (2) et autour de l'extrémité libre duquel passe le toron avançant (1) de telle sorte que ledit bras (7) tend à pivoter dans une direction prédéterminée quand la tension du toron avançant (1) augmente, un moyen de sollicitation (9) pour faire pivoter ledit bras (7) dans une direction opposée à ladite direction prédéterminée, et une bande (10) reliant mutuellement fonctionnellement ledit bras (7) à ladite bobine d'alimentation (2) de manière telle que la rotation libre de ladite bobine d'alimentation se trouve réduite à mesure que ledit bras pivote dans la direction opposée à ladite direction prédéterminée.

7. Appareil selon la revendication 2, caractérisé par le fait que l'embrayage (17) commandé par la vitesse et comportant un extrémité d'entraînement est relié fixement audit rouleau (14) et que l'extrémité opposée, n'exerçant pas d'entraînement, de l'embrayage (17) est reliée audit disque (15) coopérant avec ledit élément fixe.

8. Appareil selon la revendication 7, caractérisé par le fait que ledit disque (15) comprend un matériau doué d'hystérésis et que les moyens servant à appliquer une force de freinage sont sensiblement indépendants de la vitesse de rotation dudit rouleau (14).

9. Appareil selon la revendication 7, caractérisé par le fait que ledit disque (15) comprend un matériau électromagnétique et que le moyen destiné à appliquer une force de freinage est un frein à courants de Foucault pour lequel la force de freinage est fonction de la vitesse de rotation du disque (15).

10. Appareil selon la revendication 7 ou 8 ou 9, caractérisé par le fait que ledit embrayage (17) commandé par la vitesse comprend un embrayage centrifuge (19, 22).

11. Appareil selon la revendication 7, caractérisé par le fait que ledit embrayage (17) commandé par la vitesse comprend des moyens (19, 22) pour commander le fonctionnement dudit embrayage (17) de telle sorte que, dans une plage prédéterminée de vitesses rotativement faibles du toron, la force de freinage exercée par lesdits moyens de freinage (15-16) commandés par le déplacement est supérieure au couple transmis par ledit embrayage (17) commandé par la vitesse et de telle sorte que la force de freinage utile ne comprenne que celle exercée par ledit embrayage (17), grâce à quoi au-dessus de ladite plage prédéterminée de vitesses de toron, la force de freinage utile comprend celle exercée par lesdits moyens de freinage (15-16) commandés par le déplacement.
